# EUROPÄISCHE PATENTSCHRIFT

(11) **EP 0 931 378 B1**
(45) Veröffentlichungstag und Bekanntmachung des Hinweises auf die Patenterteilung: **31.10.2001**
(21) Anmeldenummer: 97948757.6
(22) Anmeldetag: 29.09.1997
(51) Int. Cl.: H02P 7/628, H02P 7/01, H02P 1/26

(54) **ANTRIEB FÜR EINE VAKUUMPUMPE**
OPERATING SYSTEM FOR A VACUUM PUMP
DISPOSITIF D'ENTRAINEMENT DE POMPE A VIDE

(30) Priorität: 12.10.1996 DE 19642096; 14.02.1997 DE 19705672
(43) Veröffentlichungstag der Anmeldung: 28.07.1999
(73) Patentinhaber: Leybold Vakuum GmbH, 50968 Köln (DE)
(72) Erfinder: BAHNEN, Rudolf, D-52159 Roetgen (DE); KRESSE, Wolfgang, D-50677 Köln (DE); RONTHALER, Karl-Heinz, D-53909 Zülpich (DE); TEICHGRÄBER, Utz, D-32120 Hiddenhausen (DE)
(74) Vertreter: Leineweber, Jürgen, Dipl.-Phys.
(86) Internationale Anmeldenummer: EP9705333
(87) Internationale Veröffentlichungsnummer: WO9816995

(56) Entgegenhaltungen:
- EP-A- 0 652 634
- EP-A- 0 696 842
- US-A- 4 800 327
- US-A- 4 999 560
- US-A- 5 519 301
- PATENT ABSTRACTS OF JAPAN vol. 013, no. 103 (E-725), 10.März 1989 & JP 63 274381 A (JUKI CORP), 11.November 1988,

## Beschreibung

Die Erfindung betrifft einen Antrieb für eine Vakuumpumpe.

Zu den sehr häufig eingesetzten Vakuumpumpen gehören ölgedichtete Vakuumpumpen, insbesondere Drehschiebervakuumpumpen. Diese sind üblicherweise mit 1-Phasen-Asynchronmotoren ausgerüstet.

Ein sich auf den Antriebsmotor einer ölgedichteten Vakuumpumpe auswirkendes Problem besteht darin, dass sie zwei signifikante Betriebspunkte hat, die stark unterschiedliche Wellenleistungen bzw. Drehmomente erfordern. Im einzelnen sind dies der Kaltstart der Pumpe bei üblicherweise 10° C Öltemperatur (hoher Momentenbedarf) sowie der Betrieb der Pumpe bei Enddruck (quasi Leerlauf = niedriger Momentenbedarf). Legt man die Momentenkennlinie des Motors für einen einwandfreien Kaltstart aus, so weist der Motor bei Enddruckbetrieb der Pumpe durch die Motorüberdimensionierung einen Momentenüberschuss auf, der durch die stark überhöhten Pendelmomente die Pumpe zu unerwünschten Pumpengeräuschen anregt. Legt man dagegen die Momentenkennlinie des Motors für den betriebswarmen Zustand aus, so bekommt man zwar einen kleinen kompakten Motor, der die Pumpe geräuschmäßig nicht anregt, aber die Pumpe bei den geforderten Kaltstartbedingungen nicht anlaufen lässt.

Um Vakuumpumpen weltweit vertreiben zu können, müssen sie an Versorgungsnetze anschließbar sein, die unterschiedliche Wechselspannungen (115 V, 230 V) und unterschiedliche Frequenzen (50 Hz/60 Hz) haben. Zur Anpassung der Motoren an das jeweils vorhandene Netz werden die Motorwicklungen entsprechend umgeschaltet. Diese Maßnahmen erfolgen in der Regel manuell im Motorklemmenkasten vor der Inbetriebnahme der Vakuumpumpen.

Eingriffe der beschriebenen Art müssen häufig vom Kunden selbst durchgeführt werden und sind deshalb in besonderem Maße fehlerbehaftet. Bei Fehlschaltungen besteht die Gefahr, dass am Antriebsmotor, an der Vakuumpumpe und/oder an bzw. im an die Vakuumpumpe angeschlossenen Rezipienten Schäden (zum Beispiel Lufteinbrüche oder Öl-Verseuchungen in der Vakuumkammer) entstehen. Ein Schadensrisiko dieser Art wollen insbesondere Anlagenhersteller vermeiden, die Vakuumpumpen beziehen, in ihre Anlagen einbauen und diese weltweit, also in Gebiete mit unterschiedlichen Netzspannungen, vertreiben.

Zum Stand der Technik gehört der Inhalt der Dokumente US-A-46 64 601 und EP-A-652 634. Das zuerst genannte Dokument beschreibt einen Antrieb für eine Vakuumpumpe, welcher durch einen Frequenzumrichter angesteuert wird. Aus der zweiten Schrift ist eine Kombination bekannt, die einen Gleichrichter, einen Zwischenkreis und einen Stromrichter umfasst und einen Frequenzumrichter bildet.

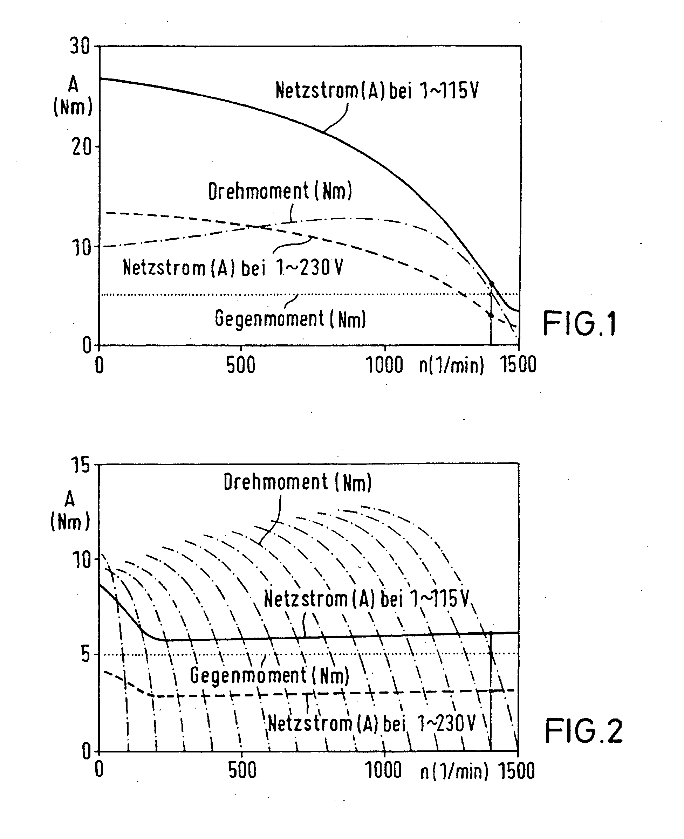

Figur 1 zeigt ein Diagramm, in dem die Stromaufnahme (A) und das Drehmoment (Nm) eines Antriebsmotors für eine Drehschiebervakuumpumpe nach dem Stand der Technik in Abhängigkeit von seiner Drehzahl bei einem als konstant angenommenen Gegenmoment dargestellt sind. Die Stromaufnahme ist für zwei typische Netzwechselspannungen (115 V, 230 V) dargestellt. Es ist ersichtlich, dass insbesondere bei kleiner Netzspannung (115 V) hohe Anfahrströme erforderlich sind. Diese setzen Sicherungen mit unerwünscht hohen Obergrenzen voraus.

Der Erfindung liegt die Aufgabe zugrunde, eine Vakuumpumpe mit einem Antrieb auszurüsten, der die geschilderten Nachteile nicht hat.

Erfindungsgemäß wird diese Aufgabe dadurch gelöst, dass der an ein Einphasennetz oder an ein Dreiphasen-(Drehstom-)Netz anschließbare Antrieb einen Frequenzumrichter umfasst, dass der Frequenzumrichter mit einem Gleichrichter, einem Spannungszwischenkreis und einem Stromrichter ausgerüstet ist, dass der Stromrichter mit Steuermitteln in Verbindung steht, dass die Spannung des Zwischenkreises zur Erkennung der Netzspannung verwendet wird und dass sich der Frequenzumrichter automatisch daran anpasst. Bei einem Antrieb dieser Art besteht die Möglichkeit, den Stromrichter des Frequenzumrichters über eine übergeordnete Steuereinrichtung so anzusteuern, dass das vom Antriebsmotor gelieferte Moment dem jeweiligen Momentenbedarf weitestgehend angepasst ist.

Figur 2 ist eine der Figur 1 entsprechende Darstellung für einen Antrieb nach der Erfindung. Sie zeigt, dass sich der Antriebsmotor praktisch mit Nennstrom gegen. das Nennmoment hochfahren lässt. Das Problem der Anpassung der Motorwicklungen an verschiedene Netzspannungen gibt es praktisch nicht. Es muss nur sichergestellt sein, dass der Frequenzumrichter für die höchste auftretende Netzspannung und sein Leistungsteil für den größten Motorstrom ausgelegt sind.

Die Figuren 3 und 4 zeigen stark schematisiert Ausführungsbeispiele für einen Antrieb nach der Erfindung.

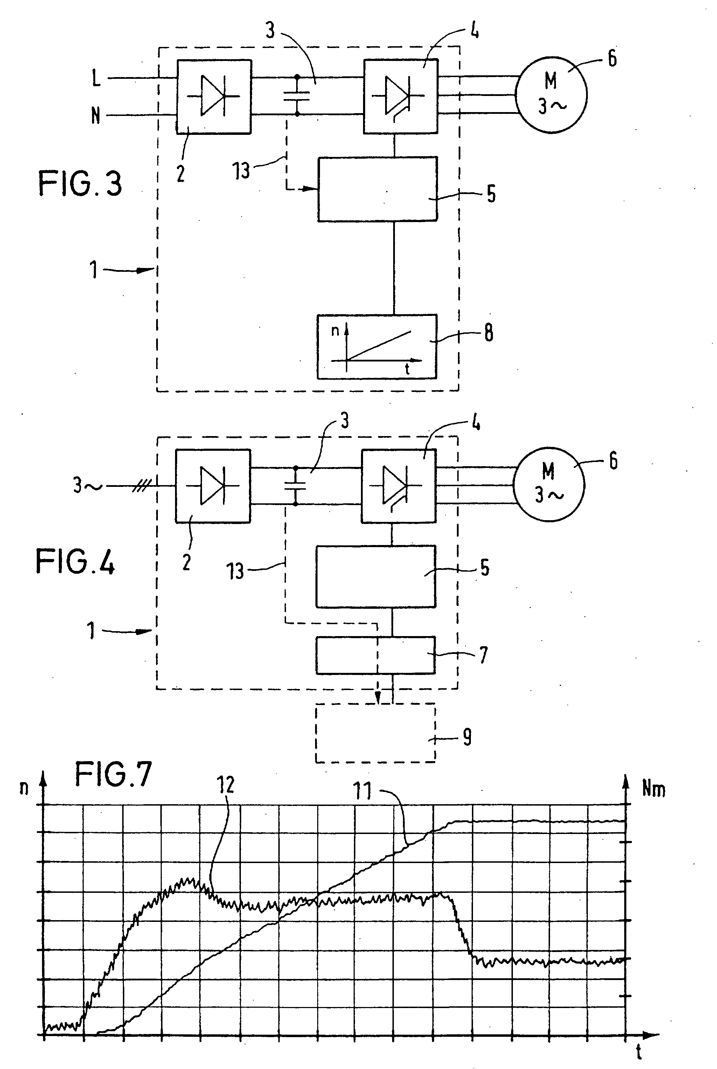

Beim Schaltungsbeispiel nach Figur 3 ist das Netz durch Linien angedeutet, die mit L (Phase) und N (Null-Leiter) bezeichnet sind. An das Netz ist ein Frequenzumrichter 1 angeschlossen, der den Gleichrichter 2, den Zwischenkreis 3 und den Stromrichter 4 umfasst. Die den Stromrichter steuernden Steuermittel sind mit 5 bezeichnet. Mit dem vom Stromrichter 4 erzeugten Drehstrom wird der

Motor 6 betrieben, der seinerseits die nicht dargestellte Pumpe antreibt. Beim Ausführungsbeispiel nach Figur 3 stehen die Steuermittel 5 mit einem Steuersignalgeber 8 in Verbindung, der ein gesteuertes, beispielsweise rampenförmiges Hochfahren der Drehzahl der Pumpe bewirkt. Der Steuersignalgeber 8 ist Bestandteil des Frequenzumrichters 1.

Beim Ausführungsbeispiel nach Figur 4 ist der Gleichrichter 2 an ein Drehstromnetz angeschlossen. In Bezug auf die Steuerung des Motors und damit der Pumpe ist gegenüber der Steuerung nach Figur 3 eine vorteilhafte Alternative dargestellt. Der Frequenzumrichter ist mit einer Schnittstelle 7 ausgerüstet, über die eine außerhalb des Frequenzumrichters 1 angeordnete, steuersignalgebende Einheit anschließbar ist. Sie ist als Block 9 gestrichelt dargestellt, um die Vielzahl der Möglichkeiten anzudeuten. Die Pumpe kann z.B. an ein übergeordnetes Leitsystem zur Prozessautomatisierung angebunden werden. Hiermit lassen sich u.a. Konfigurationen einstellen bzw. anpassen (Motordrehzahl, Hochlaufzeit etc.) und Fehlerdiagnosemöglichkeiten durchführen.

Als Schnittstelle kommen folgende Möglichkeiten in Betracht:
- Serielle Schnittstelle RS232 / RS485
- Feldbussysteme, z.B. Profibus, LON, Divice-Net
- Analoge u./o. digitale Ein- u. Ausgänge, ggf. potentialfrei bzw. getrennt
- Lichtwellenleitersysteme.

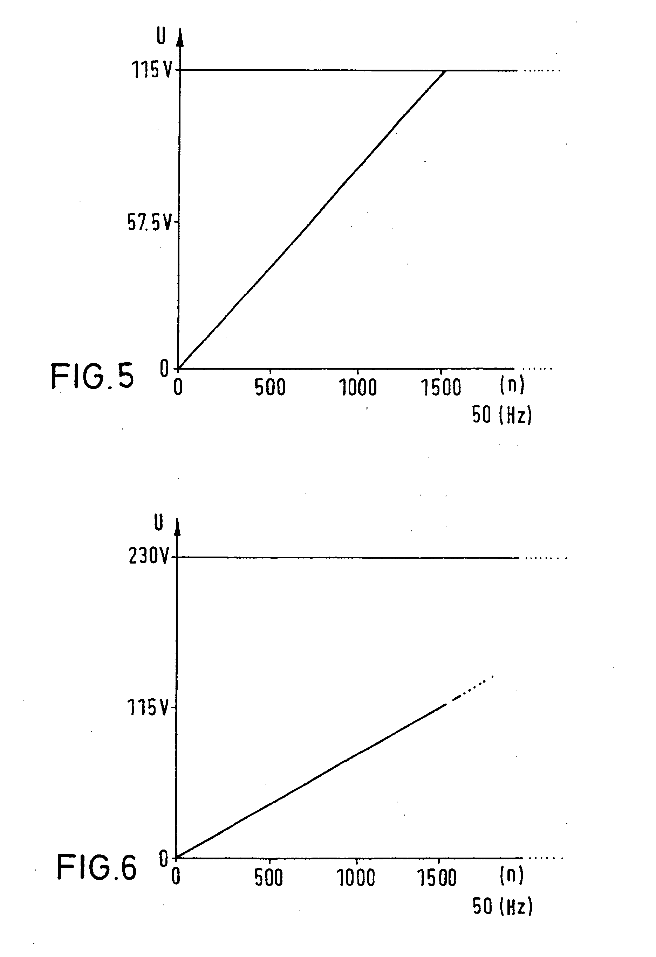

Beispiele für Frequenzgänge des Stromrichters sind in den Figuren 5 und 6 dargestellt (Spannung U gegen Drehzahl n bzw. Frequenz Hz). Es ist ersichtlich, dass die Frequenzgänge unabhängig davon sind, ob der Frequenzrichter 1 an ein 115 V- oder an ein 230 V-Netz angeschlossen ist. Es reicht aus, wenn ein Motor 6 verwendet wird, der für einen festen, vorzugsweise den niedrigen Netzspannungsbereich ausgelegt ist.

Ein Beispiel für ein besonders zweckmäßiges Hochfahren der Pumpe zeigt Figur 7. In dem dargestellten Diagramm sind die Frequenz n (Kurve 11) und das Drehmoment Nm (Kurve 12) gegen die Zeit t dargestellt. Die Drehzahl steigt etwa linear an. In dieser Phase hat das Drehmoment einen im wesentlichen konstanten Wert. Nach dem Erreichen der Nenndrehzahl nimmt das Drehmoment (und damit die Stromaufnahme des Motors) ab und wird auf einem niedrigeren Wert konstant gehalten.

Das Netzteil des Frequenzumrichters 1 muss für den (Netz-) Spannungsbereich 80 bis 276 V, der Stromrichter 4 für den betriebsmäßig auftretenden maximalen Strangstrom konzipiert werden. Die Netzspannungserkennung kann vorzugsweise von der Zwischenkreisspannung, die proportional zur Netzspannung ist, abgeleitet werden. In den Figuren 3 und 4 ist diese Möglichkeit jeweils angedeutet. In Figur 3 steht der Zwischenkreis 3 über die Leitung 13 mit den Steuermitteln 5 in Verbindung. Anhand dieser Information kann die notwendige Einstellung der Knickfrequenz softwaremäßig geändert werden. Beim Ausführungsbeispiel nach Figur 4 ist die Leitung 13 über die Schnittstelle 7 nach außen geführt, so dass der Steuersignalgeber 9 die Netzspannung erkennen kann.

## Patentansprüche

1. Antrieb für eine Vakuumpumpe, **dadurch gekennzeichnet, dass** der an ein Einphasennetz oder an ein Dreiphasen-(Drehstrom-)Netz anschließbare Antrieb neben dem Motor (6) einen Frequenzumrichter (1) umfaßt, dass der Frequenzumrichter (1) mit einem Gleichrichter (2), mit einem Spannungszwischenkreis (3) und mit einem Stromrichter (4) ausgerüstet ist, dass der Stromrichter (4) mit Steuermitteln in Verbindung steht, dass die Spannung des Zwischenkreises (3) zur Erkennung der Netzspannung verwendet wird und dass sich der Frequenzumrichter (1) automatisch daran anpasst.

2. Antrieb nach Anspruch 1, **dadurch gekennzeichnet, dass** die Steuermittel (5) und Steuersignalgeber (8) Bestandteil des Frequenzumrichters sind.

3. Antrieb nach Anspruch 2 , **dadurch gekennzeichnet, dass** als Steuersignalgeber (8) eine Einheit vorgesehen ist, deren Signale ein gesteuertes, z.B. ein rampenförmiges Hochfahren der Drehzahl bewirken.

4. Antrieb nach Anspruch 1, 2 oder 3, **dadurch gekennzeichnet, dass** der Frequenzumrichter (1) mit einer Schnittstelle (7) ausgerüstet ist, über die ein oder weitere Steuersignalgeber (9) angeschlossen sind.

5. Antrieb nach einem der vorhergehenden Ansprüche, **dadurch gekennzeichnet, dass** der Motor (6) für eine feste Netzspannung ausgelegt ist.

6. Antrieb nach Anspruch 5, **dadurch gekennzeichnet, dass** der Motor (6) für eine niedrige Netzspannung ausgelegt ist.

## Claims

1. Drive for a vacuum pump, **characterised in that** the drive, which can be connected to a single-phase supply network or to a three-phase supply network, comprises in addition to the motor (6) a frequency converter (1), **in that** the frequency converter (1) is equipped with a rectifier (2), with a voltage link (3) and with a power converter (4), **in that** the power converter (4) is connected to control means, **in that** the voltage of the link (3) is used to detect the supply voltage and **in that** the frequency converter (1) automatically adapts to the supply voltage.

2. Drive according to Claim 1, **characterised in that** the control means (5) and control signal generator (8) are part of the frequency converter.

3. Drive according to Claim 2, **characterised in that** a unit, the signals of which produce a controlled, e.g. rampshaped, run-up of the rotational speed, is provided as control signal generator (8).

4. Drive according to Claim 1, 2 or 3, **characterised in that** the frequency converter (1) is equipped with an interface (7), by means of which a control signal transmitter (9) or further control signal transmitters (9) are connected.

5. Drive according to one of the preceding claims, **characterised in that** the motor (6) is designed for a fixed supply voltage.

6. Drive according to Claim 5, **characterised in that** the motor (6) is designed for a low supply voltage.

## Revendications

1. Dispositif d'entraînement pour une pompe à vide, **caractérisé en ce que** le dispositif d'entraînement, qui peut être raccordé à un réseau monophasé ou à un réseau triphasé (à courant triphasé)? comporte en dehors du moteur (6) un convertisseur de fréquence (1), que le convertisseur de fréquence (1) est équipé d'un redresseur (2), d'un circuit intermédiaire de tension (3) et d'un convertisseur statique (4), que le convertisseur statique (4) est relié à des moyens de commande, que la tension du circuit intermédiaire (3) est utilisé pour identifier la tension du réseau et que le convertisseur de fréquence (1) s'adapte automatiquement à cette tension.

2. Dispositif d'entraînement selon la revendication 1, **caractérisé en ce que** les moyens de commande (5) et le générateur de signaux de commande (8) font partie du convertisseur de fréquence (1).

3. Dispositif d'entraînement selon la revendication 2, **caractérisé en ce qu'**il est prévu comme générateur de signaux de commande (8) une unité, dont les signaux déclenchent une montée commandée, par exemple en forme de rampe, de la vitesse de rotation.

4. Dispositif d'entraînement selon la revendication 1, 2 ou 3, **caractérisé en ce que** le convertisseur de fréquence (1) est équipé d'une interface (7), au moyen de laquelle sont raccordés un ou plusieurs générateurs de signaux de commande (9).

5. Dispositif d'entraînement selon l'une des revendications précédentes, **caractérisé en ce que** le moteur (6) est conçu pour une tension fixe du réseau.

6. Dispositif d'entraînement selon la revendication 5, **caractérisé en ce que** le moteur (6) est conçu pour une basse tension du réseau.
